# EUROPEAN PATENT SPECIFICATION

(11) **EP 3 624 114 B1**
(45) Date of publication and mention of the grant of the patent: **11.08.2021**
(21) Application number: 19181507.5
(22) Date of filing: 20.06.2019
(51) Int. Cl.: G10L 15/16

(54) **METHOD AND APPARATUS FOR SPEECH RECOGNITION**
VERFAHREN UND VORRICHTUNG ZUR SPRACHERKENNUNG
PROCÉDÉ ET APPAREIL POUR LA RECONNAISSANCE VOCALE

(30) Priority: 13.09.2018 KR 20180109459
(43) Date of publication of application: 18.03.2020
(73) Proprietor: Samsung Electronics Co., Ltd., Gyeonggi-do 16677 (KR)
(72) Inventor: LEE, Min-Joong, 16678 Gyeonggi-do (KR)
(74) Representative: D'Halleweyn, Nele Veerle Trees Gertrudis

(56) References cited:
- WO-A1-2017/213055
- YAJIE MIAO ET AL: "EESEN: End-to-end speech recognition using deep RNN models and WFST-based decoding", 2015 IEEE WORKSHOP ON AUTOMATIC SPEECH RECOGNITION AND UNDERSTANDING (ASRU), 1 December 2015 (2015-12-01), pages 167-174, XP055287634, DOI: 10.1109/ASRU.2015.7404790 ISBN: 978-1-4799-7291-3
- BAHDANAU DZMITRY ET AL: "End-to-end attention-based large vocabulary speech recognition", 2016 IEEE INTERNATIONAL CONFERENCE ON ACOUSTICS, SPEECH AND SIGNAL PROCESSING (ICASSP), IEEE, 20 March 2016 (2016-03-20), pages 4945-4949, XP032901544, DOI: 10.1109/ICASSP.2016.7472618 [retrieved on 2016-05-18]

## Description

### BACKGROUND

### 1. Field

The following description relates an apparatus and method with speech recognition.

### 2. Description of Related Art

A speech recognition system may include an acoustic model and a language model. The acoustic model may generate information indicating which pronunciation a speech signal is most similar to, and the language model may generate information indicating how frequently a certain sentence is used or which word is next most likely. The acoustic model and the language model may each be implemented by neural networks.

An encoder of the acoustic model may generate a feature encoded from an input, and a decoder of the acoustic model may generate an output using the encoded feature. The input may correspond to a speech, and the output may include information associated with a pronunciation. The encoder and the decoder may be implemented end-to-end in conjunction therewith. In an example of a typical speech recognition system, a character-based end-to-end acoustic model may generate an output long in length and thus a performance thereof is limited in terms of speed. In another example of a typical speech recognition system, a word-based end-to-end acoustic model cannot be readily implemented due to a great number of output classes.

In a subword-based end-to-end acoustic model, a mismatch between training and recognition occurs due to a subword that may not be easily recognized by the subword-based end-to-end acoustic model.

WO 2017/213055 A1 discloses a speech recognition device that includes: an acoustic model based on an End-to-End neural network responsive to an observed sequence formed of prescribed acoustic features obtained from a speech signal by feature extracting unit, for calculating probability of the observed sequence being a certain symbol sequence; and a decoder responsive to a symbol sequence candidate, for decoding a speech signal by a WFST based on a posterior probability of each of word sequences corresponding to the symbol sequence candidate, probabilities calculated by the acoustic model for symbol sequences selected based on an observed sequence, and a posterior probability of each of the plurality of symbol sequences.

### SUMMARY

It is an object of the invention to overcome the shortcomings in the prior art. This object of the invention is solved by the independent claims. Specific embodiments are defined in the dependent claims.

### BRIEF DESCRIPTION OF THE DRAWINGS

FIG. 1 is a flowchart illustrating an example of a speech recognition method.
FIG. 2 is a diagram illustrating an example of a speech recognition method.
FIG. 3 is a diagram illustrating an example of a speech recognition method.
FIG. 4 is a flowchart illustrating an example of a speech recognition method.
FIG. 5 is a diagram illustrating an example of how a point in time may be updated.
FIG. 6 is a diagram illustrating an example of a speech recognition method.
FIG. 7 is a diagram illustrating an example of how a language model may be used.
FIG. 8 is a diagram illustrating an example of a training method.
FIG. 9 is a diagram illustrating an example of a configuration of an apparatus.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween. Likewise, similar expressions, for example, "between" and "immediately between," and "adjacent to" and "immediately adjacent to," are also to be construed in the same way.

As used herein, the term "and/or" includes any one and any combination of any two or more of the associated listed items.

The terminology used herein is for describing various examples only and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Unless otherwise defined, all terms, including technical and scientific terms, used herein have the same meaning as commonly understood by one of ordinary skill in the art to which this disclosure pertains and based on an understanding of the disclosure of the present application. Terms, such as those defined in commonly used dictionaries, are to be interpreted as having a meaning that is consistent with their meaning in the context of the relevant art and the disclosure of the present application and are not to be interpreted in an idealized or overly formal sense unless expressly so defined herein.

Also, in the description of example embodiments, detailed description of structures or functions that are thereby known after an understanding of the disclosure of the present application will be omitted when it is deemed that such description will cause ambiguous interpretation of the example embodiments.

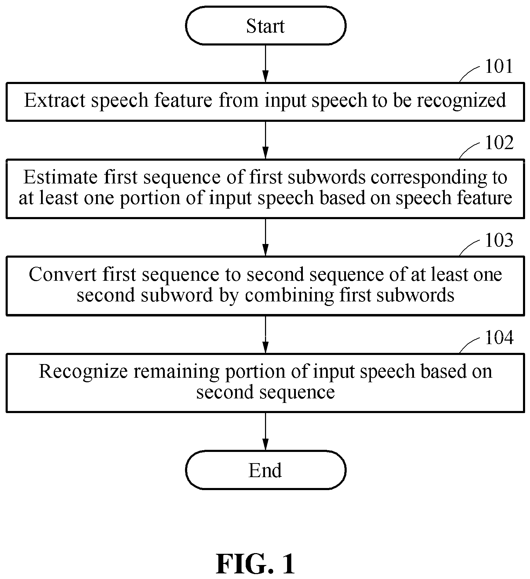

FIG. 1 is a flowchart illustrating an example of a speech recognition method.

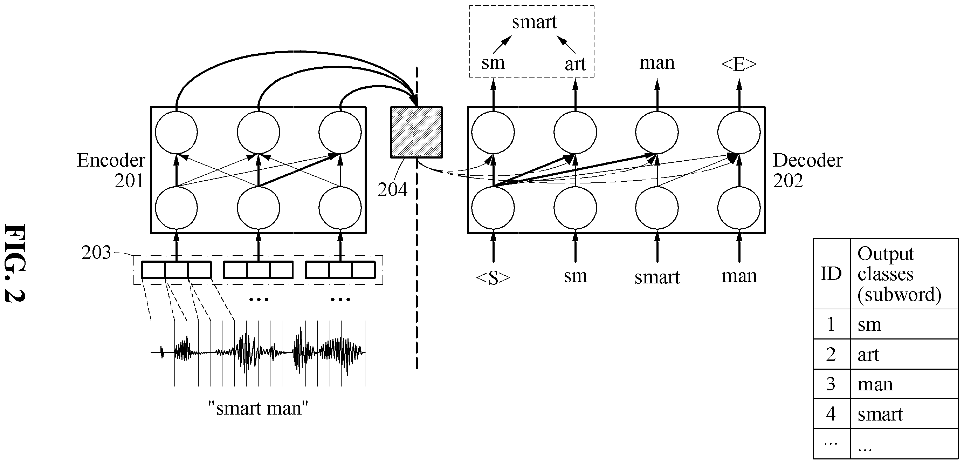

Referring to FIG. 1, in operation 101, a speech recognition apparatus may extract a speech feature from an input speech to be recognized. The speech recognition performed by the apparatus is machine speech recognition (e.g., automatic speech recognition (ASR)). The speech recognition apparatus described herein refers to an apparatus with a configuration (e.g., a mobile phone) that includes a configuration to recognize a speech and may be embodied by, for example, a hardware module or a module including both hardware and software (e.g., a processor being configured to execute instructions). The speech recognition apparatus obtains the input speech. For example, the speech recognition apparatus may obtain the input speech from a sensor (e.g., a microphone) that is either a component of the speech recognition apparatus or is a component separate from the speech recognition apparatus. The input speech may include, as a speech or voice signal, waveform information indicating a pronunciation. The speech recognition apparatus may use an acoustic model to estimate a pronunciation of the input speech, and a language model to supplement a recognition operation. The speech recognition apparatus extracts the speech feature to recognize the input speech. The speech feature may be a feature suitable for being processed by an encoder and a decoder of the speech recognition apparatus. The speech recognition apparatus may recognize a speech using the encoder and the decoder, and an example of how the speech recognition apparatus recognizes a speech will be described in detail with reference to FIGS. 1 and 2.

FIG. 2 is a diagram illustrating an example of a speech recognition method. Referring to FIG. 2, the speech recognition apparatus may extract a speech feature 203 from an input speech. The input speech may be a speech signal including information for each of frames, and the speech feature 203 may be a sequence of information extracted in at least one frame unit and represented by a multidimensional vector. Hereinafter, "smart man" will be provided as an example of an input speech for convenience of description.

Referring back to FIG. 1, in operation 102, the speech recognition apparatus may estimate a first sequence of first subwords corresponding to at least one portion of the input speech based on the extracted speech feature. As illustrated in FIG. 2, the speech recognition apparatus applies the speech feature 203 to an encoder 201 and estimates a first sequence, for example, "sm" and "art," from an output of a decoder 202.

The encoder 201 and the decoder 202 may be an end-to-end encoder-decoder embodied by one or more neural networks. The one or more neural networks may include any one or any combination of any two or more of a deep neural network (DNN), a recurrent neural network (RNN), a recurrent DNN (RDNN), a bidirectional RNN (BRNN or BdRNN), and a self-attention NN (SANN). In the one or more neural networks, nodes of layers may be linearly affected by one another and parameters of the one or more neural networks (for example, values to be output from the nodes, relationships between the nodes, and the like) may be optimized by training.

The end-to-end encoder-decoder may be of a network structure in which an encoder and a decoder are integrated therein and configured to generate a sequence of recognition results from a sequence of an input speech. For example, the encoder 201 and the decoder 202 embodied in such an end-to-end structure may directly generate a recognition result corresponding to the input speech from the input speech "smart man." In this example, the encoder 201 and the decoder 202 may be trained in advance to generate the sequence of the recognition results from the sequence of the input speech.

The encoder 201 may an encoded feature 204 by encoding the speech feature 203. The encoder 201 converts a dimension of the speech feature 203 to generate encoded information. The encoded feature 204 may be applied to the decoder 202 (e.g., in vector or other multidimensional formats or forms). The decoder 202 generates a recognition result based on the encoded feature 204.

In an example, an output layer of the decoder 202 may include nodes respectively corresponding to subwords in a subword dictionary (e.g., in classified or probabilistic form). The subword dictionary may record or store subwords separated from words based on a frequency of use. For example, the subword dictionary may record subwords based on a frequency of use and separately from words. The subword dictionary may map the subwords to identifiers (IDs) and record the subwords mapped to the IDs. For example, when a frequency of use of a subword "sm" is determined to be high based on a predefined standard, the subword dictionary may map the subword "sm" to ID 1 and record the subword "sm" mapped to ID 1. Similarly, when a frequency of use of a word "smart" is determined to be high based on the predefined standard, the subword dictionary may map the word "smart" to ID 4 and record the word "smart" mapped to ID 4. In this example, samples to be measurement targets for which their frequencies of use are to be measured may be obtained from dialogs or conversations made in various situations, and a frequency of use of a subword may be measured by mining the subword from the samples.

A word dictionary may record or store a large amount of words and thus be large in size. Thus, in a typical speech recognition system, when output classes are designed based on such a large word dictionary, the number of nodes of the decoder 202 may become large and a network structure may thus be complicated. In contrast, in an example of a speech recognition apparatus of the present application, the subword dictionary may be applied to a plurality of words and may record or store subwords with high frequencies of use (e.g., the subword dictionary may record or store subwords with high frequencies of use while excluding, from recording, subwords with low frequencies of use (e.g., subwords below a threshold)), and thus the subword dictionary may be smaller in size compared to the word dictionary of the typical speech recognition system described above, and thus the network structure in the example of the speech recognition apparatus of the present application may be simplified compared to the network structure of the typical speech recognition system described above. By such simplifying of the network structure, the example speech recognition apparatus of the present application may increase a recognition speed, compared to the typical speech recognition system described above, using an end-to-end encoder-decoder embodied based on the subword dictionary, for example, an end-to-end encoder 201-decoder 202.

As illustrated in FIG. 2, the speech recognition apparatus may estimate each of first subwords "sm" and "art," which is at least one portion of the input speech "smart man," using the end-to-end encoder 201-decoder 202. A token <S> starting such an estimation operation (e.g., a start token <S>) is applied to an input layer of the decoder 202, and the decoder 202 generates subwords based on the encoded feature 204 generated by the encoder 201. The decoder 202 outputs a token <E> ending the estimation operation (e.g., an end token <E>) and completes the generation of the subwords.

The speech recognition apparatus estimates the first sequence of the first subwords "sm" and "art." In this example, information indicating "sm" and information indicating "art" may be generated by different nodes, respectively, in the output layer of the decoder 202.

Referring back to FIG. 1, in operation 103, the speech recognition apparatus may convert the first sequence of the first subwords to a second sequence of at least one second subword by combining the first subwords. In an example, the speech recognition apparatus may combine at least two of the first subwords and generate a second subword in the subword dictionary. When a word is made from the first subwords to be completed, the speech recognition apparatus may generate at least one second subword corresponding to the completed word.

As illustrated in FIG. 2, the speech recognition apparatus may generate a second subword "smart" by combining the first subwords "sm" and "art." The speech recognition apparatus generates the second subword "smart" corresponding to a word recognizable to the end-to-end encoder 201-decoder 202. The recognizable word may be a word used to train the end-to-end encoder 201-decoder 202. For example, the speech recognition apparatus may identify IDs, for example, 1 and 2, of the first subwords "sm" and "art" that are recorded in the subword dictionary and convert a sequence of the IDs 1 and 2 to ID 4.

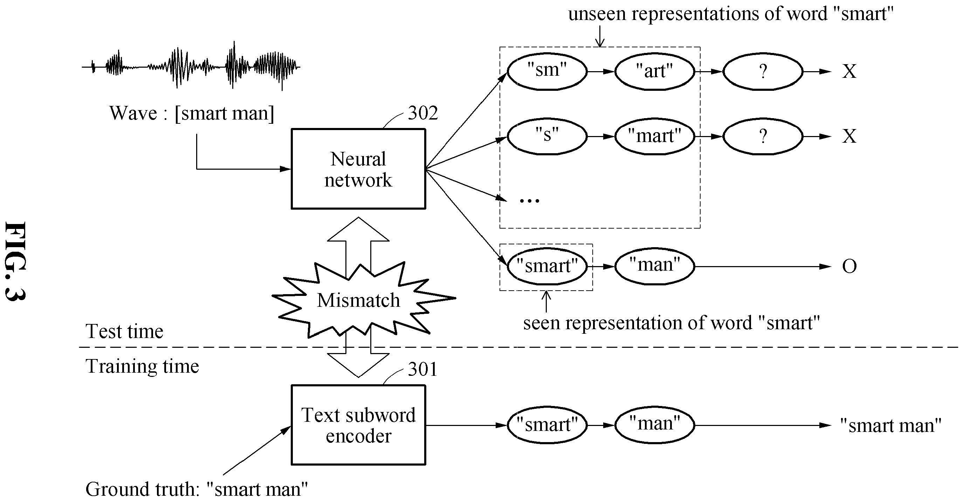

As illustrated in FIG. 2, the speech recognition apparatus may convert the first sequence of the first subwords "sm" and "art" that is estimated by the end-to-end encoder 201-decoder 202 to information recognizable to the end-to-end encoder 201-decoder 202 (e.g., information used to train the end-to-end encoder 201-decoder 202), thereby improving accuracy in recognition. Through such an operation of converting a sequence of subwords to another sequence, the speech recognition apparatus may minimize a mismatch between a training operation and a recognition operation. Hereinafter, an example of such a mismatch will be described in detail with reference to FIG. 3.

FIG. 3 is a diagram illustrating an example of a speech recognition method.

Referring to FIG. 3, a neural network 302 of an end-to-end encoder-decoder of a speech recognition apparatus may be trained to recognize a sequence of "smart" and "man" from a speech signal corresponding to "smart man," rather than being trained to recognize a sequence of "sm," "art," and "man," or a sequence of "s," "mart," and "man." Thus, the neural network 302 of the speech recognition apparatus may estimate a subword of "smart" from the speech signal and estimate a subword of "man" based on the estimated "smart" and the speech signal. To the contrary, a typical speech recognition apparatus may estimate the sequence "sm" and "art" from the speech signal or the sequence of "s" and "mart" from the speech signal, and then struggle to estimate a subword of "man."

Since a ground truth, or a correct sentence, to be used for training is given as the sequence of "smart" and "man," rather than as the sequence of "sm," "art," and "man," or the sequence of "s," "mart," and "man," the speech recognition apparatus may estimate the sequence of the subwords "smart" and "man." In an example, a sequence of a ground truth provided to the neural network 302 for the training may be generated by a text subword encoder 301. The text subword encoder 301 may encode a word into a subword through various methods. For example, in a case in which the text subword encoder 301 is configured to generate a sequence of at least one subword matching a given text the longest in a subword dictionary, and a text "smart man" is given, the text subword encoder 301 may generate a sequence of subwords matching the text "smart man" the longest, for example, a sequence of "smart" and "man." The text "smart man" matches "smart" longer than "sm," and a subword matching "smart man" the longest in the subword dictionary is "smart." In addition, a subword matching a remaining portion "man" of the text the longest in the subword dictionary is "man."

For example, the text subword encoder 301 may be configured to generate a sequence of at least one subword that is the longest subword in a subword dictionary matching a portion of a given text. For example, when the given text is "smart man," both the subword "sm" and the subword "smart" in the subword dictionary match a first portion of the text "smart man" (i.e., "smart"). Accordingly, as "smart" is the longest subword between "sm" and "smart," the text subword encoder 301 may determine the subword "smart" to be a subword matching the first portion of the text "smart man." In addition, when "man" is the longest subword corresponding to a second portion of the text "smart man" (i.e., "man"), the text subword encoder 301 may determine the subword "man" to be the subword matching the second portion of the text "smart man". Accordingly, the text subword encoder 301 may determine the sequence of subwords "smart man" to be match the text "smart man."

Hereinafter, an example of how such a text subword encoder (e.g., the text subword encoder 301) generates a sequence of subwords matching the longest in a subword dictionary will be described in detail. However, in another example, the text subword encoder may use another encoding method to generate a subword sequence. In such other example, however, an encoding method of the text subword encoder to be used in an inferencing operation and an encoding method of the text subword encoder to be used in a training operation may be substantially the same.

Referring back to FIG. 1, in operation 104, the speech recognition apparatus may recognize a remaining portion of the input speech based on the second sequence obtained through the converting. As illustrated in FIG. 2, the speech recognition apparatus estimates the subword "man" as the second subword based on the second sequence "smart". However, in a case in which such an estimation operation is performed without the sequence conversion, a typical speech recognition apparatus may estimate a next subword based on the first subwords "sm" and "art" and thus may struggle to accurately estimate the second subword "man." In contrast, an example speech recognition apparatus of the present application may estimate an accurate pronunciation of "smart man" from the input speech by minimizing a mismatch between training and recognition through the sequence conversion.

In another example, the subword dictionary may include subwords "s," "mart," "man," and "smart," and the text subword encoder 301 may encode an input of "smart man" to output a sequence of "s," "mart," and "man." In an example, a typical speech recognition apparatus may be trained by receiving a speech signal of "smart man" as the sequence of "s," "mart," and "man," in a training operation, and may not readily predict "man" from the sequence of "sm" and "art" or the sequence of "smart" in an inferencing operation. In contrast, the speech recognition apparatus of the present application may use, for inferencing, an encoding method that is substantially the same as an encoding method of the text subword encoder 301 used for training, and convert the sequence of "sm" and "art" or the sequence of "smart" to the sequence of "s," "mart," and "man" and input the sequence of "s," "mart," and "man" to the neural network 302. The text subword encoder 301 may use other methods, in addition to such a longest matching method described above.

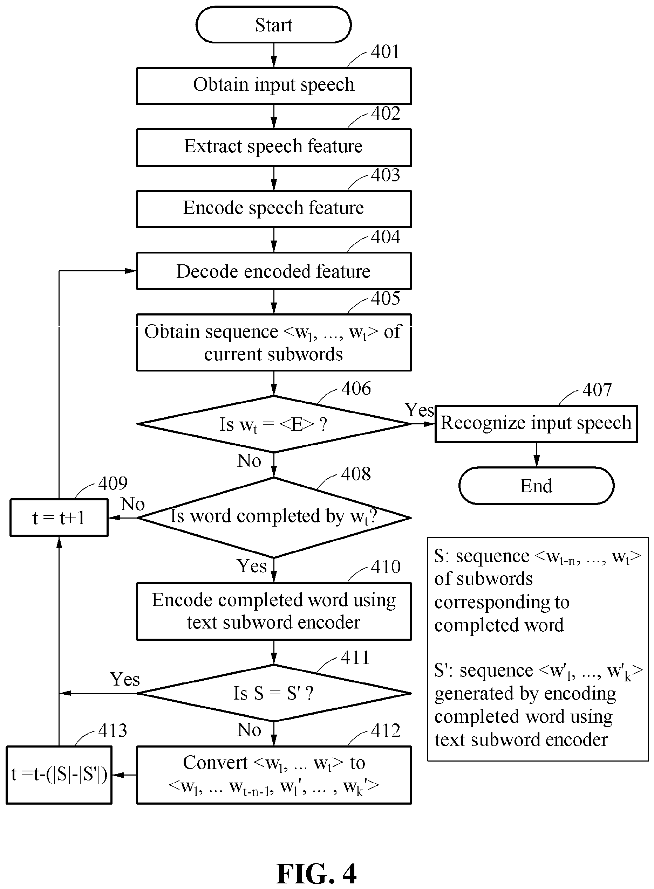

FIG. 4 is a flowchart illustrating an example of a speech recognition method.

Hereinafter, an example of how to repeat an estimation operation to estimate a sequence of subwords at each point in time will be described with reference to FIG. 4, and what has been already described above in relation to the estimation operation will be briefly described with reference to FIG. 4.

Referring to FIG. 4, in operation 401, the speech recognition apparatus may obtain an input speech. In operation 402, the speech recognition apparatus may extract a speech feature from the input speech. In operation 403, the speech recognition apparatus may encode the speech feature using an encoder. In operation 404, the speech recognition apparatus decodes the encoded speech feature using a decoder. Then, the speech recognition apparatus may repeat the generation of a sequence of subwords at each point in time through decoding. For example, the speech recognition apparatus may generate a sequence corresponding to a current point in time, generate a sequence corresponding to one or more subsequent points in time, complete such sequence generation, and recognize the input speech. Herein, a point in time may correspond to a divided frame of the input speech.

In operation 405, the speech recognition apparatus may obtain a sequence <w₁, ..., wₜ> of current subwords corresponding to a current point in time. In the sequence <w₁, ..., wₜ>, w₁ indicates a subword generated at a point 1 (corresponding to a first point in time, for example), and wₜ indicates a subword generated at a point t (corresponding to a current point in time, for example). In operation 406, the speech recognition apparatus may determine whether wₜ corresponds to a token <E>. In operation 407, when the token <E> is output by the decoder, the speech recognition apparatus may complete estimation of subwords and recognizes the input speech.

In operation 408, when wₜ does not correspond to the token <E>, the speech recognition apparatus may determine whether a word is completed by wₜ. For example, the speech recognition apparatus may determine that a word is not completed by wₜ being "sm," and determine that the word is completed to be "smart" by wₜ being "art."

In an example, whether the word is completed may be determined based on whether a spacing is present in the subword wₜ. A subword dictionary may include information as to whether there is a spacing for each subword. For example, the subword dictionary may record "art"_1 and "art"_2, in which "art"_1 indicates a subword followed by a spacing and "art"_2 indicates a subword without a spacing thereafter. When wₜ-1 is "sm" and wₜ is "art"_1, the speech recognition apparatus may determine that the word "smart" is completed by "art"_1. In operation 409, when the word is not completed by wₜ, the speech recognition apparatus updates a point in time t to be t+1 (t = t+1). Then, the speech recognition apparatus repeats a subword estimation operation as described above (e.g., the process returns to operation 404). According to an example, the subword dictionary may include an additional subword indicating a spacing. For example, an additional ID indicating a spacing may be stored in the subword dictionary. In this example, when wₜ corresponds to an ID indicating a spacing, the speech recognition apparatus may determine that the word is completed.

In operation 410, when the word is completed by wₜ, the speech recognition apparatus generates a sequence S' <w'₁, ..., w'ₖ> by encoding the word completed by wₜ, using a text subword encoder. For example, the text subword encoder may generate a sequence of subwords by encoding a text corresponding to the word completed by wₜ. In this example, the sequence S of the subwords corresponding to the completed word may be <"sm," "art">, and the sequence S' generated using the text subword encoder may be <"smart">.

In operation 411, the speech recognition apparatus determines whether the sequence S of the subwords corresponding to the word completed by wₜ and the sequence S' generated by the text subword encoder correspond to each other. In response to the sequence S and the sequence S' corresponding to each other, the speech recognition apparatus updates the point in time t to be t + 1 (t = t + 1) in operation 409 and repeats the subword estimation operation (e.g., the process returns to operation 404). For example, when t is 1 and a sequence of subwords is <"I," "am," "sm," "art">, a sequence <w₁, ..., wₜ> of current subwords obtained in operation 405 is <w₁> which is <"I">. Accordingly, in operation 408, the word "I" is complete by wₜ being "I". Accordingly, in operation 410, the sequence of the subwords corresponding to the completed word is <"I">, and the sequence generated using the text subword encoder is also <"I">. Accordingly, in operation 411, the sequence S <"I"> and the sequence S' <"I"> correspond to each other, and the speech recognition apparatus updates the point in time from 1 to 2 in operation 409 and repeats the subword estimation operation, wherein the next sequence <w₁, ..., wₜ> of current subwords obtained in operation 405 is <w₁,w₂> which is <"I," "am">. However, when t is 4 and a sequence of subwords is <"I," "am," "sm," "art">, a sequence <w₁, ..., wₜ> of current subwords obtained in operation 405 is < w₁,w₂,w₃,w₄> which is <"I," "am," "sm," "art">. Accordingly, in operation 408, the word "smart" is complete by wₜ being "art". Accordingly, in operation 410, the sequence of the subwords corresponding to the completed word is <"smart">, and the sequence generated using the text subword encoder is also <"smart">. However, in operation 411, the sequence S <"I," "am," "sm," "art"> and the sequence S' <"I," "am," "smart"> do not correspond to each other, and the process proceeds to operation 412.

In operation 412, in response to the sequence S and the sequence S' differing from each other, the speech recognition apparatus converts <w₁, ..., wₜ> to <w₁, ..., wₜ₋ₙ₋₁, w'₁, ..., w'ₖ>. The speech recognition apparatus may convert the sequence S to the sequence S' within a sequence of subwords up to a current point in time. For example, the speech recognition apparatus may convert a sequence <"I," "am," "sm," "art"> to a sequence <"I," "am," "smart">.. According to an example, in a case in which an end-to-end encoder-decoder is embodied by an RNN, the speech recognition apparatus may restore a hidden state of a hidden layer in the RNN to a state before the sequence S of the subwords is generated. The RNN may have a network structure in which previously generated outputs affect an output to be newly generated. The sequence S is converted to the sequence S', and thus the speech recognition apparatus may restore the hidden state to the state before the sequence S is generated such that the network may not be affected by the previously generated sequence S.

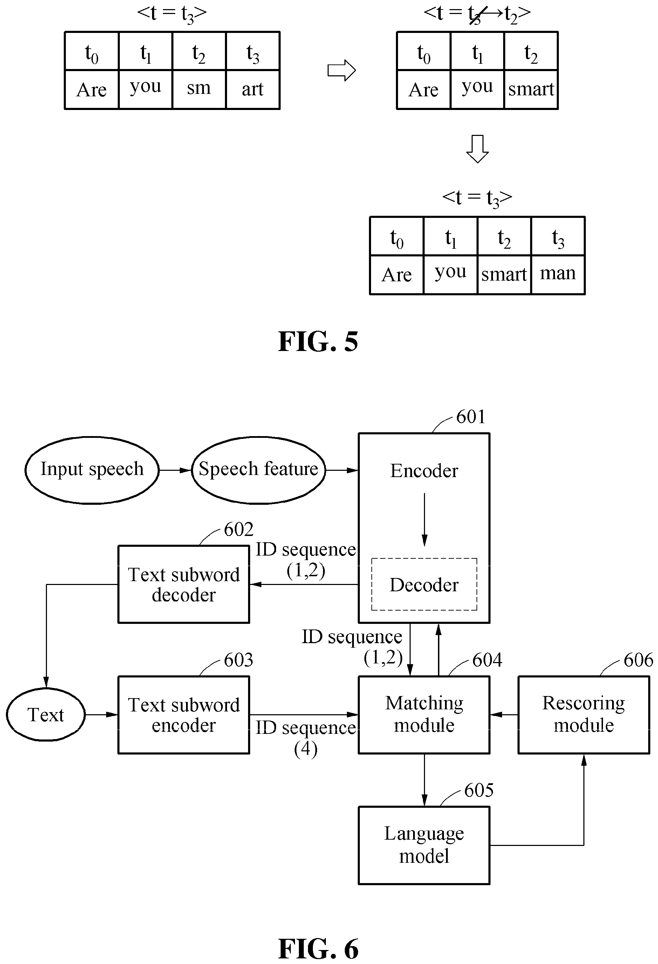

In operation 413, in response to the sequence conversion, the speech recognition apparatus updates the point in time t to t - (|S| - |S'|) (that is, t = t - (|S| - |S'|)). Since the number of estimated subwords is reduced due to the sequence conversion, the speech recognition apparatus may update the point in time t associated with the subword estimation operation by the number of the subwords reduced by the sequence conversion. That is, in an example, |S| is a length of the sequence S, IS'I is a length of the sequence S', |S| - |S'| is the number of the subwords reduced by the sequence conversion, and t - (|S| - |S'|) is the updated point in time t associated with the subword estimation operation. Hereinafter, how to update a point in time will be described in detail with reference to FIG. 5.

FIG. 5 is a diagram illustrating an example of how a point in time is updated.

Referring to FIG. 5, the speech recognition apparatus estimates subwords "are," "you," "sm," and "art" respectively corresponding to points in time t₀, t₁, t₂, and t₃ up until a point in time t (t = t₃). The speech recognition apparatus may repeat such an estimation operation at each point in time.

At the point in time t (t = t₃), the speech recognition apparatus converts a sequence of the subwords "are," "you," "sm," and "art" to a sequence of "are," "you," and "smart." For example, the speech recognition apparatus may convert a sequence S <"sm," "art"> to a sequence S' <"smart">. In this example, a length |S| of the sequence S may be 2 and a length IS'I of the sequence S' may be 1, and thus (|S| - |S'|) is 1 (2 - 1 = 1). The speech recognition apparatus updates the current point to t₂ (t = t₂) by subtracting, from the current point t3, the value, 1, which is obtained by subtracting the length IS'I of the sequence S' from the length |S| of the sequence S. That is, in the example, t is 3, |S| is 2, |S'| is 1, and thus t - (|S| - |S'|) is 2. Accordingly, the speech recognition apparatus updates the current point to t₂.

At a point in time t3 (t = t3) corresponding to a next repetition of the updated point in time t2 (t = t2), the speech recognition apparatus estimates a subword "man." Through such a time point updating operation based on the sequence conversion, the speech recognition apparatus may synchronize a point in time for estimating a subword and repeating such an estimation.

FIG. 6 is a diagram illustrating another example of a speech recognition method.

Referring to FIG. 6, the speech recognition apparatus generates an ID sequence (1, 2) of first subwords corresponding to at least one portion of an input speech using an end-to-end encoder-decoder 601. As described above, a subword dictionary may record IDs for respective subwords, and thus a decoder of the speech recognition apparatus may generate IDs corresponding to subwords. For example, as illustrated, the decoder generates an ID sequence (1, 2) of IDs respectively corresponding to "sm" and "art."

In accordance with the invention, the speech recognition apparatus generates a text corresponding to the first subwords using a text subword decoder 602. The speech recognition apparatus applies the ID sequence (1, 2) of the first subwords to the text subword decoder 602, and the text subword decoder 602 generates a text "smart" corresponding to the ID sequence (1, 2).

The speech recognition apparatus generates a second sequence of at least one second subword matching a result of encoding, by a text subword encoder 603, the text generated by the text subword decoder 602. The speech recognition apparatus applies the text "smart" to the text subword encoder 603, and the text subword encoder 603 generates an ID sequence (4) of the at least one second subword matching a sequence corresponding to the result of encoding the text "smart" by the text subword encoder 603.

A matching module 604 of the speech recognition apparatus compares the ID sequence (1, 2) generated by the end-to-end encoder-decoder 601 and the ID sequence (4) generated by the text subword encoder 603. In response to the ID sequence (1, 2) and the ID sequence (4) differing from each other, the matching module 604 converts the ID sequence (1, 2) to the ID sequence (4) and transmits the ID sequence (4) obtained through the converting to the end-to-end encoder-decoder 601.

The matching module 604 performs such a matching operation on an ID sequence in conjunction with a language module 605 and a rescoring module 606 of the speech recognition apparatus. In an example, the end-to-end encoder-decoder 601 of the speech recognition apparatus may generate first sequence candidates to generate an ID sequence. The matching module 604 may generate second sequence candidates corresponding to the first sequence candidates and transmit the generated second sequence candidates to the language model 605. The language model 605 may be used to generate scores corresponding to the second sequence candidates, and the matching module 604 may determine one of the second sequence candidates to be the second sequence based on the scores.

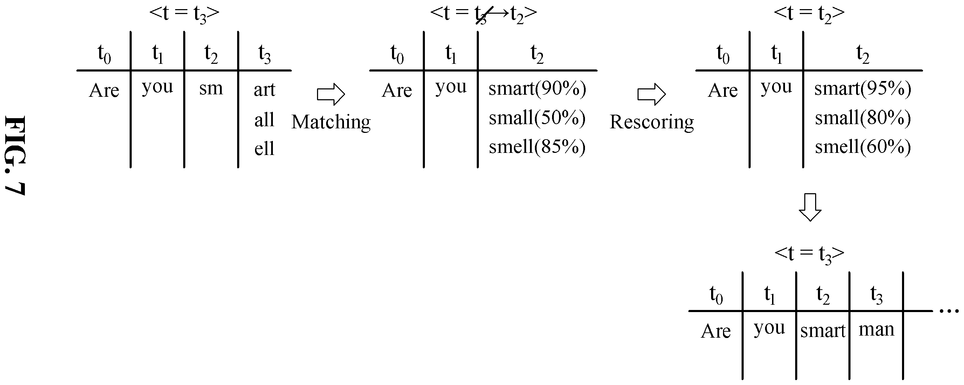

The language model 605 may be used to generate recognition results corresponding to the second sequence candidates. The language model 605 may be used to measure or determine how correct the second sequence candidates are grammatically or semantically, and generate the recognition results corresponding to the second sequence candidates. The rescoring module 606 may update the scores corresponding to the second sequence candidates based on the recognition results generated by the language model 605. The matching module 604 may determine one of the second sequence candidates to be the second sequence based on the scores updated by the rescoring module 606. Hereinafter, an example of how to convert a sequence using a language model will be described in detail with reference to FIG. 7.

FIG. 7 is a diagram illustrating an example of how a language model is used.

Referring to FIG. 7, the speech recognition apparatus estimates subwords "are," "you," and "sm" respectively corresponding to points in time t0, t1, and t2 up until a point in time, for example, (t = t3), and estimates subword candidates "art," "all," and "ell" corresponding to the point t3.

At the point in time t3 (t = t3), the speech recognition apparatus updates a point in time to t2 (t = t2) while converting first sequence candidates <"sm," "art">, <"sm," "all">, and <"sm," "ell> to second sequence candidates <"smart">, <"small">, and <"smell">. In an example, the speech recognition apparatus may generate scores corresponding to the second sequence candidates based on an output of an end-to-end encoder-decoder. In this example, the scores may indicate probabilities of the second sequence candidates to be estimated, respectively.

As described above, the speech recognition apparatus may update the scores corresponding to the second sequence candidates based on a recognition result of a language model. After the updating, the speech recognition apparatus estimates "smart" having a greatest probability among the second sequence candidates, as a subword corresponding to the point in time t2 (t = t2). At the point in time t3 (t = t3), the speech recognition apparatus estimates a subword based on the estimated subword "smart." The speech recognition apparatus may integrate an acoustic model and the language model to increase accuracy in estimating a pronunciation of a speech.

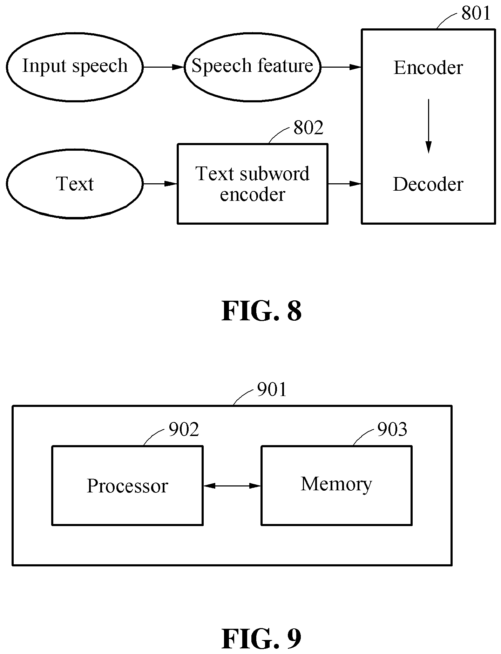

FIG. 8 is a diagram illustrating an example of a training method.

Referring to FIG. 8, a training apparatus for speech recognition may train an end-to-end encoder-decoder 801. The training apparatus may apply, to the end-to-end encoder-decoder 801, a speech feature extracted from an input speech and generate a recognition result. The training apparatus may apply, to a text subword encoder 802, a text corresponding to a ground truth, or a correct sentence, of the input speech and generate a sequence of the ground truth generated by the text subword encoder 802. The training apparatus may train the end-to-end encoder-decoder 801 based on a difference between the recognition result of the end-to-end encoder-decoder 801 and the sequence of the ground truth generated by the text subword encoder 802. The training apparatus may train a neural network of the end-to-end encoder-decoder 801 to minimize a loss between the recognition result and the sequence of the ground truth. To optimize the neural network, various approaches including, for example, backpropagation, may be used.

FIG. 9 is a diagram illustrating an example of a configuration of an apparatus.

Referring to FIG. 9, an apparatus 901 includes a processor 902 and a memory 903. The apparatus 901 may be the speech recognition apparatus or the training apparatus described herein. The processor 902 may include at least one of modules and/or devices described above with reference to FIGS. 1 through 8, and/or perform any one, any combination, or all operations or methods described above with reference to FIGS. 1 through 8. The memory 903 may store information associated with the speech recognition method and/or the training method described herein, such as parameters of the trained neural networks, or store computing-based instructions through which the speech recognition method and/or the training method may be implemented. The memory 903 may be a volatile memory or a nonvolatile memory.

The processor 902 may execute the instructions and control the apparatus 901. Instructions to be executed by the processor 902 may be stored in the memory 903. The apparatus 901 may be connected to an external device, for example, a personal computer (PC) and a network, through an input and output device (not shown) and exchange data with the external device.

The speech recognition apparatuses, encoders, decoders, end-to-end encoder-decoders, processors, memories, encoder 201, decoder 202, text subword encoder 301, end-to-end encoder-decoder 601, text subword decoder 602, text subword encoder 603, matching module 604, language module 605, rescoring module 606, end-to-end encoder-decoder 801, text subword encoder 802, apparatus 901, processor 902, memory 903, and other apparatuses, devices, modules, and other components described herein with respect to FIGS.1-9 are implemented by or representative of hardware components. Examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. A hardware component may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in FIGS. 1-9 that perform the operations described in this application are performed by computing hardware, for example, by one or more processors or computers, implemented as described above executing instructions or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions used herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media. Examples of a non-transitory computer-readable storage medium include read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD-Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks, and any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components. Therefore, the scope of the disclosure is defined not by the detailed description, but by the claims, and all variations within the scope of the claims are to be construed as being included in the disclosure.

## Claims

1. A processor-implemented speech recognition method comprising:
extracting (101) a speech feature from an input speech to be recognized;
estimating (102) a first sequence (S) of first subwords corresponding to at least one portion of the input speech based on the extracted speech feature;
converting (103) the first sequence (S) to a second sequence (S') of at least one second subword by combining at least two of the first subwords; and
recognizing (104) the input speech by recognizing a remaining portion of the input speech based on the second sequence (S');
**characterized in that** the converting (103) of the first sequence (S) to the second sequence (S') comprises:
generating a text from the first sequence (S) using a text subword decoder (602);
generating (410) the second sequence (S') of the at least one second subword by encoding the text using a text subword encoder (301; 603; 802); and
in response to determining (411) that the first sequence (S) and the second sequence (S') differ from each other, converting (412) the first sequence (S) to the second sequence (S').

2. The method of claim 1, wherein the estimating (102) of the first sequence (S) comprises:
estimating each of the first subwords corresponding to the at least one portion of the input speech using an end-to-end encoder-decoder (201, 202; 601; 801) implementing one or more neural networks (302),
wherein an output layer of the end-to-end encoder-decoder (201, 202; 601; 801) includes nodes corresponding to subwords in a subword dictionary;
wherein preferably the subword dictionary records subwords based on a frequency of use and separately from words.

3. The method of claim 1 or 2, wherein the converting (103) of the first sequence (S) to the second sequence (S') comprises:
generating, based on the first subwords, a subword corresponding to a word recognizable to an end-to-end encoder-decoder (201, 202; 601; 801) as the at least one second subword;
wherein preferably the recognizable word is a word used for training the end-to-end encoder-decoder (201, 202; 601; 801).

4. The method of any one of the previous claims, wherein the converting (103) of the first sequence (S) to the second sequence (S') comprises:
generating a subword in a subword dictionary as the at least one second subword.

5. The method of any one of the previous claims, wherein the converting (103) of the first sequence (S) to the second sequence (S') comprises:
in response to a sequence of the first subwords forming a word, generating a subword corresponding to the formed word as the at least one second subword.

6. The method of any one of the previous claims, wherein the converting (103) of the first sequence (S) to the second sequence (S') comprises:
determining (408) whether a formation of a word is completed by a lastly-generated first subword among the first subwords;
in response to the formation of the word being completed, identifying, from a subword dictionary, a subword matching at least one combination of the first subwords as the at least one second subword; and
converting the first subwords to the identified at least one second subword;
wherein preferably the determining (408) of whether the formation of word is completed by the lastly-generated first subword comprises:
determining whether the formation of the word is completed based on information included in the subword dictionary as to whether a spacing is present after the lastly-generated first subword.

7. The method of any one of the previous claims,
further comprising:
estimating (405) a sequence of subwords corresponding to at least one portion of the input speech at each of a plurality of points in time, wherein the estimating (102) of the first sequence (S) is performed at a current point in time among the plurality of points in time; and
updating (413) the current point in time by subtracting, from the current point in time, a value obtained by subtracting a length of the second sequence (S') from a length of the first sequence (S).

8. The method of any one of the previous claims, wherein the estimating (102) of the first sequence (S) comprises:
generating first sequence candidates corresponding to the at least one portion of the input speech,
wherein the converting (103) of the first sequence (S) to the second sequence (S') comprises:
generating second sequence candidates corresponding to the first sequence candidates;
generating recognition results corresponding to the second sequence candidates using a language model; and
determining one of the second sequence candidates to be the second sequence (S') based on the generated recognition results.

9. A non-transitory computer-readable storage medium (903) storing instructions that, when executed by one or more processors (902), cause the one or more processors (902) to perform the method of any one of the previous claims.

10. A speech recognition apparatus (901) comprising:
one or more processors (902) configured to:
extract (101) a speech feature from an input speech to be recognized;
estimate (102) a first sequence (S) of first subwords corresponding to at least one portion of the input speech based on the extracted speech feature;
convert (103) the first sequence (S) to a second sequence (S') of at least one second subword by combining at least two of the first subwords; and
recognize (104) the input speech by performing a recognition of a remaining portion of the input speech based on the second sequence (S');
**characterized in that** the one or more processors (902) are further configured to:
generate a text from the first sequence (S) using a text subword decoder (602);
generate (410) the second sequence (S') of the at least one second subword by encoding the text using a text subword encoder (301; 603; 802); and
in response to determine (411) that the first sequence (S) and the second sequence (S') differ from each other, convert (412) the first sequence (S) to the second sequence (S').

11. The apparatus of claim 10, further comprising a memory (903) storing instructions that, when executed by the one or more processors (902), configure the one or more processors (902) to implement the extracting (101) of the speech feature, the estimating (102) of the first sequence (S), the converting (103) of the first sequence (S), and the recognition (104) of the remaining portion of the input speech.

12. The apparatus of claim 10 or 11, wherein the one or more processors (902) are further configured to:
estimate each of the first subwords corresponding to the at least one portion of the input speech using an end-to-end encoder-decoder (201, 202; 601; 801) comprising one or more neural networks (302),
wherein an output layer of the end-to-end encoder-decoder (201, 202; 601; 801) includes nodes corresponding to subwords in a subword dictionary;
wherein preferably the subword dictionary records subwords based on a frequency of use and separately from words.

13. The apparatus of any one of claims 10-12, wherein the one or more processors (902) are further configured to:
determine (408) whether a formation of a word is completed by a lastly generated first subword among the first subwords;
in response to the formation of the word being completed, identify, from a subword dictionary, a subword matching a combination of at least one of the first subwords as the at least one second subword; and
convert the first subwords to the identified at least one second subword.

14. The apparatus of any one of claims 10-13,
wherein the one or more processors (902) are further configured to:
estimate (405) a sequence of subwords corresponding to at least one portion of the input speech at each of a plurality of points in time, wherein the estimating (102) of the first sequence (S) is performed at a current point in time among the plurality of points in time; and
update (413) the current point in time by subtracting, from the current point in time, a value obtained by subtracting a length of the second sequence (S') from a length of the first sequence (S).

15. The apparatus of any one of claims 10-14, wherein the one or more processors (902) are further configured to:
generate first sequence candidates corresponding to the at least one portion of the input speech;
generate second sequence candidates corresponding to the first sequence candidates;
generate recognition results corresponding to the second sequence candidates using a language model; and
determine one of the second sequence candidates to be the second sequence (S') based on the generated recognition results.

## Patentansprüche

1. Prozessorimplementiertes Spracherkennungsverfahren, das Folgendes umfasst:
Extrahieren (101) eines Sprachmerkmals aus einer zu erkennenden eingegebenen Sprache;
Schätzen (102) einer ersten Sequenz (S) von ersten Unterwörtern, die mindestens einem Teil der eingegebenen Sprache entsprechen, basierend auf dem extrahierten Sprachmerkmal;
Umwandeln (103) der ersten Sequenz (S) in eine zweite Sequenz (S') von mindestens einem zweiten Unterwort durch Kombinieren von mindestens zwei der ersten Unterwörter; und
Erkennen (104) der eingegebenen Sprache durch Erkennen eines verbleibenden Teils der eingegebenen Sprache basierend auf der zweiten Sequenz (S');
**dadurch gekennzeichnet, dass** das Umwandeln (103) der ersten Sequenz (S) in die zweite Sequenz (S') Folgendes umfasst:
Erzeugen eines Textes aus der ersten Sequenz (S) unter Verwendung eines Textunterwortdecodierers (602);
Erzeugen (410) der zweiten Sequenz (S') des mindestens einen zweiten Unterworts durch Codieren des Textes unter Verwendung eines Textunterwortcodierers (301; 603; 802); und
als Reaktion auf die Bestimmung (411), dass sich die erste Sequenz (S) und die zweite Sequenz (S') voneinander unterscheiden, Umwandeln (412) der ersten Sequenz (S) in die zweite Sequenz (S').

2. Verfahren nach Anspruch 1, wobei das Schätzen (102) der ersten Sequenz (S) Folgendes umfasst:
Schätzen jedes der ersten Unterwörter, die dem mindestens einen Teil der eingegebenen Sprache entsprechen, unter Verwendung eines Ende-zu-Ende-Codierer-Decodierers (201, 202; 601; 801), der ein oder mehrere neuronale Netze (302) implementiert,
wobei eine Ausgabeschicht des Ende-zu-Ende-Codierer-Decodierers (201, 202; 601; 801) Knoten enthält, die Unterwörtern in einem Unterwortwörterbuch entsprechen;
wobei das Unterwortwörterbuch vorzugsweise Unterwörter basierend auf einer Verwendungshäufigkeit und getrennt von Wörtern aufzeichnet.

3. Verfahren nach Anspruch 1 oder 2, wobei das Umwandeln (103) der ersten Sequenz (S) in die zweite Sequenz (S') Folgendes umfasst:
basierend auf den ersten Unterwörtern, Erzeugen eines Unterworts, das einem Wort entspricht, das für einen Ende-zu-Ende-Codierer-Decodierer (201, 202; 601; 801) als das mindestens eine zweite Unterwort erkennbar ist;
wobei es sich bei dem erkennbaren Wort vorzugsweise um ein Wort handelt, das zum Trainieren des Ende-zu-Ende-Codierer-Decodierers (201, 202; 601; 801) verwendet wird.

4. Verfahren nach einem der vorhergehenden Ansprüche, wobei das Umwandeln (103) der ersten Sequenz (S) in die zweite Sequenz (S') Folgendes umfasst:
Erzeugen eines Unterworts in einem Unterwortwörterbuch als das mindestens eine zweite Unterwort.

5. Verfahren nach einem der vorhergehenden Ansprüche, wobei das Umwandeln (103) der ersten Sequenz (S) in die zweite Sequenz (S') Folgendes umfasst:
als Reaktion darauf, dass eine Sequenz der ersten Unterwörter ein Wort bildet, Erzeugen eines Unterworts, das dem gebildeten Wort entspricht, als das mindestens eine zweite Unterwort.

6. Verfahren nach einem der vorhergehenden Ansprüche, wobei das Umwandeln (103) der ersten Sequenz (S) in die zweite Sequenz (S') Folgendes umfasst:
Bestimmen (408), ob eine Bildung eines Wortes durch ein zuletzt erzeugtes erstes Unterwort unter den ersten Unterwörtern vervollständigt ist;
als Reaktion darauf, dass die Bildung des Wortes vervollständigt ist, Identifizieren eines Unterworts aus einem Unterwortwörterbuch, das mindestens einer Kombination der ersten Unterwörter entspricht, als mindestens ein zweites Unterwort; und
Umwandeln der ersten Unterwörter in das identifizierte mindestens eine zweite Unterwort;
wobei vorzugsweise das Bestimmen (408), ob die Bildung des Wortes durch das zuletzt erzeugte erste Unterwort vervollständigt ist, Folgendes umfasst:
Bestimmen, ob die Bildung des Wortes vervollständigt ist, basierend auf in dem Unterwortwörterbuch enthaltenen Informationen darüber, ob ein Abstand nach dem zuletzt erzeugten ersten Unterwort vorhanden ist.

7. Verfahren nach einem der vorhergehenden Ansprüche, das weiterhin Folgendes umfasst:
Schätzen (405) einer Sequenz von Unterwörtern, die zu jedem von mehreren Zeitpunkten mindestens einem Teil der eingegebenen Sprache entsprechen, wobei das Schätzen (102) der ersten Sequenz (S) zu einem aktuellen Zeitpunkt unter der Vielzahl von Zeitpunkten durchgeführt wird; und
Aktualisieren (413) des aktuellen Zeitpunkts durch Subtrahieren eines Wertes, der durch Subtrahieren einer Länge der zweiten Sequenz (S') von einer Länge der ersten Sequenz (S) erhalten wird, von dem aktuellen Zeitpunkt.

8. Verfahren nach einem der vorhergehenden Ansprüche, wobei das Schätzen (102) der ersten Sequenz (S) Folgendes umfasst:
Erzeugen von dem mindestens einen Teil der eingegebenen Sprache entsprechenden ersten Sequenzkandidaten,
wobei das Umwandeln (103) der ersten Sequenz (S) in die zweite Sequenz (S') Folgendes umfasst:
Erzeugen von den ersten Sequenzkandidaten entsprechenden zweiten Sequenzkandidaten;
Erzeugen von den zweiten Sequenzkandidaten entsprechenden Erkennungsergebnissen unter Verwendung eines Sprachmodells; und
Bestimmen eines der zweiten Sequenzkandidaten als die zweite Sequenz (S') basierend auf den generierten Erkennungsergebnissen.

9. Nicht flüchtiges, computerlesbares Speichermedium (903), auf dem Anweisungen gespeichert sind, die, wenn sie von mindestens einem Prozessor (902) ausgeführt werden, bewirken, dass der mindestens eine Prozessor (902) das Verfahren nach einem der vorhergehenden Ansprüche ausführt.

10. Vorrichtung (901) zur Spracherkennung, die Folgendes umfasst:
mindestens einen Prozessor (902), der zu Folgendem konfiguriert ist:
Extrahieren (101) eines Sprachmerkmals aus einer zu erkennenden eingegebenen Sprache;
Schätzen (102) einer ersten Sequenz (S) von ersten Unterwörtern, die mindestens einem Teil der eingegebenen Sprache entsprechen, basierend auf dem extrahierten Sprachmerkmal;
Umwandeln (103) der ersten Sequenz (S) in eine zweite Sequenz (S') von mindestens einem zweiten Unterwort durch Kombinieren von mindestens zwei der ersten Unterwörter; und
Erkennen (104) der eingegebenen Sprache durch Ausführen einer Erkennung eines verbleibenden Teils der eingegebenen Sprache basierend auf der zweiten Sequenz (S');
**dadurch gekennzeichnet, dass** der mindestens eine Prozessor (902) weiterhin zu Folgendem ausgelegt ist:
Erzeugen eines Textes aus der ersten Sequenz (S) unter Verwendung eines Textunterwortdecodierers (602);
Erzeugen (410) der zweiten Sequenz (S') des mindestens einen zweiten Unterworts durch Codieren des Textes unter Verwendung eines Textunterwortcodierers (301; 603; 802); und
als Reaktion auf die Bestimmung (411), dass die erste Sequenz (S) und die zweite Sequenz (S') sich voneinander unterscheiden, Umwandeln (412) der ersten Sequenz (S) in die zweite Sequenz (S').

11. Vorrichtung nach Anspruch 10, die weiterhin einen Speicher (903) umfasst, in dem Anweisungen gespeichert sind, die, wenn sie von dem mindestens einen Prozessor (902) ausgeführt werden, den mindestens einen Prozessor (902) konfigurieren, um das Extrahieren (101) des Sprachmerkmals, das Schätzen (102) der ersten Sequenz (S), das Umwandeln (103) der ersten Sequenz (S) und das Erkennen (104) des verbleibenden Teils der eingegebenen Sprache zu implementieren.

12. Vorrichtung nach Anspruch 10 oder 11, wobei der mindestens eine Prozessor (902) weiterhin zu Folgendem konfiguriert ist:
Schätzen jedes der ersten Unterwörter, die dem mindestens einen Teil der eingegebenen Sprache entsprechen, unter Verwendung eines Ende-zu-Ende-Codierer-Decodierers (201, 202; 601; 801), der ein oder mehrere neuronale Netze (302) umfasst,
wobei eine Ausgabeschicht des Ende-zu-Ende-Codierer-Decodierers (201, 202; 601; 801) Knoten enthält, die Unterwörtern in einem Unterwortwörterbuch entsprechen;
wobei das Unterwortwörterbuch vorzugsweise Unterwörter basierend auf einer Verwendungshäufigkeit und getrennt von Wörtern aufzeichnet.

13. Vorrichtung nach einem der Ansprüche 10 bis 12, wobei der mindestens eine Prozessor (902) weiterhin zu Folgendem konfiguriert ist:
Bestimmen (408), ob eine Bildung eines Wortes durch ein zuletzt erzeugtes erstes Unterwort unter den ersten Unterwörtern vervollständigt ist;
als Reaktion darauf, dass die Bildung des Wortes vervollständigt ist, Identifizieren eines Unterworts aus einem Unterwortwörterbuch, das einer Kombination mindestens eines der ersten Unterwörter entspricht, als mindestens ein zweites Unterwort; und
Umwandeln der ersten Unterwörter in das identifizierte mindestens eine zweite Unterwort.

14. Vorrichtung nach einem der Ansprüche 10 bis 13, wobei der mindestens eine Prozessor (902) weiterhin zu Folgendem konfiguriert ist:
Schätzen (405) einer Sequenz von Unterwörtern, die zu jedem von mehreren Zeitpunkten mindestens einem Teil der eingegebenen Sprache entsprechen, wobei das Schätzen (102) der ersten Sequenz (S) zu einem aktuellen Zeitpunkt unter der Vielzahl von Zeitpunkten durchgeführt wird; und
Aktualisieren (413) des aktuellen Zeitpunkts durch Subtrahieren eines Wertes, der durch Subtrahieren einer Länge der zweiten Sequenz (S') von einer Länge der ersten Sequenz (S) erhalten wird, von dem aktuellen Zeitpunkt.

15. Vorrichtung nach einem der Ansprüche 10 bis 14, wobei der mindestens eine Prozessor (902) weiterhin zu Folgendem konfiguriert ist:
Erzeugen von dem mindestens einen Teil der eingegebenen Sprache entsprechenden ersten Sequenzkandidaten;
Erzeugen von den ersten Sequenzkandidaten entsprechenden zweiten Sequenzkandidaten;
Erzeugen von den zweiten Sequenzkandidaten entsprechenden Erkennungsergebnissen unter Verwendung eines Sprachmodells; und
Bestimmen eines der zweiten Sequenzkandidaten als die zweite Sequenz (S') basierend auf den erzeugten Erkennungsergebnissen.

## Revendications

1. Procédé de reconnaissance vocale mis en œuvre par un processeur, comprenant :
l'extraction (101) d'une particularité vocale issue d'une parole d'entrée à reconnaître,
l'estimation (102) d'une première séquence (S) de premiers sous-mots correspondant à au moins une partie de la parole d'entrée compte tenu de la particularité vocale extraite,
la conversion (103) de la première séquence (S) en une deuxième séquence (S') d'au moins un deuxième sous-mot par combinaison d'au moins deux des premiers sous-mots, et
la reconnaissance (104) de la parole d'entrée par reconnaissance d'une partie restante de la parole d'entrée compte tenu de la deuxième séquence (S'),
**caractérisé en ce que** la conversion (103) de la première séquence (S) en une deuxième séquence (S') comprend :
la génération d'un texte à partir de la première séquence (S) au moyen d'un décodeur de sous-mots orienté texte (602),
la génération (410) de la deuxième séquence (S') de l'au moins un deuxième sous-mot par encodage du texte au moyen d'un encodeur de sous-mots orienté texte (301 ; 603 ; 802), et
en réaction à la détermination (411) du fait que la première séquence (S) et la deuxième séquence (S') diffèrent l'une de l'autre, la conversion (412) de la première séquence (S) en deuxième séquence (S').

2. Procédé selon la revendication 1, dans lequel l'estimation (102) de la première séquence (S) comprend :
l'estimation de chacun des premiers sous-mots correspondant à l'au moins une partie de la parole d'entrée au moyen d'un encodeur-décodeur de bout en bout (201, 202 ; 601 ; 801) mettant en œuvre un ou plusieurs réseaux neuronaux (302) ;
une couche de sortie de l'encodeur-décodeur de bout en bout (201, 202 ; 601 ; 801) comportant des nœuds correspondant à des sous-mots présents dans un dictionnaire de sous-mots,
le dictionnaire de sous-mots enregistrant de préférence des sous-mots en fonction d'une fréquence d'utilisation et séparément des mots.

3. Procédé selon la revendication 1 ou 2, dans lequel la conversion (103) de la première séquence (S) en deuxième séquence (S') comprend :
la génération, compte tenu des premiers sous-mots, d'un sous-mot correspondant à un mot reconnaissable par un encodeur-décodeur de bout en bout (201, 202 ; 601 ; 801) en tant que l'au moins un deuxième sous-mot ;
le mot reconnaissable étant de préférence un mot servant à l'apprentissage de l'encodeur-décodeur de bout en bout (201, 202 ; 601 ; 801).

4. Procédé selon l'une quelconque des revendications précédentes, dans lequel la conversion (103) de la première séquence (S) en deuxième séquence (S') comprend :
la génération d'un sous-mot présent dans un dictionnaire de sous-mots en tant que l'au moins un deuxième sous-mot.

5. Procédé selon l'une quelconque des revendications précédentes, dans lequel la conversion (103) de la première séquence (S) en deuxième séquence (S') comprend :
en réaction au fait qu'une séquence de premiers sous-mots forme un mot, la génération d'un sous-mot, correspondant au mot formé, en tant que l'au moins un deuxième sous-mot.

6. Procédé selon l'une quelconque des revendications précédentes, dans lequel la conversion (103) de la première séquence (S) en deuxième séquence (S') comprend :
la détermination (408) du fait ou non que la formation d'un mot est achevée sous l'effet d'un premier sous-mot dernièrement généré parmi les premiers sous-mots,
en réaction au fait que la formation du mot est achevée, l'identification, à partir d'un dictionnaire de sous-mots, d'un sous-mot correspondant à au moins une combinaison des premiers sous-mots, en tant que ledit au moins un deuxième sous-mot, et
la conversion des premiers sous-mots en ledit au moins un deuxième sous-mot identifié ;
la détermination (408) du fait ou non que la formation d'un mot est achevée sous l'effet du premier sous-mot dernièrement généré comprenant de préférence :
la détermination du fait ou non que la formation du mot est achevée compte tenu d'informations présentes dans le dictionnaire de sous-mots et concernant la présence ou non d'un intervalle après le premier sous-mot dernièrement généré.

7. Procédé selon l'une quelconque des revendications précédentes, comprenant en outre :
l'estimation (405) d'une séquence de sous-mots correspondant à au moins une partie de la parole d'entrée à chaque instant d'une pluralité d'instants, ladite estimation (102) de la première séquence (S) étant réalisée à un instant actuel parmi la pluralité d'instants, et
l'actualisation (413) de l'instant actuel en soustrayant dudit instant actuel une valeur obtenue en soustrayant la longueur de la deuxième séquence (S') de la longueur de la première séquence (S).

8. Procédé selon l'une quelconque des revendications précédentes, dans lequel l'estimation (102) de la première séquence (S) comprend :
la génération de premières séquences candidates correspondant à l'au moins une partie de la parole d'entrée ;
ladite conversion (103) de la première séquence (S) en deuxième séquence (S') comprenant :
la génération de deuxièmes séquences candidates correspondant aux premières séquences candidates,
la génération de résultats de reconnaissance correspondant aux deuxièmes séquences candidates au moyen d'un modèle linguistique, et
la détermination d'une des deuxièmes séquences candidates comme étant la deuxième séquence (S') compte tenu des résultats de reconnaissance générés.

9. Support d'enregistrement (903) non transitoire lisible par ordinateur sur lequel sont stockées des instructions qui, lorsqu'elles sont exécutées par un ou plusieurs processeurs (902), amènent le ou les processeurs (902) à réaliser le procédé selon l'une quelconque des revendications précédentes.

10. Dispositif de reconnaissance vocale (901) comprenant :
un ou plusieurs processeurs (902) conçus pour :
extraire (101) une particularité vocale issue d'une parole d'entrée à reconnaître,
estimer (102) une première séquence (S) de premiers sous-mots correspondant à au moins une partie de la parole d'entrée compte tenu de la particularité vocale extraite,
convertir (103) la première séquence (S) en une deuxième séquence (S') d'au moins un deuxième sous-mot par combinaison d'au moins deux des premiers sous-mots, et
reconnaître (104) la parole d'entrée en réalisant une reconnaissance d'une partie restante de la parole d'entrée compte tenu de la deuxième séquence (S') ;
**caractérisé en ce que** le ou les processeurs (902) sont conçus en outre pour :
générer un texte à partir de la première séquence (S) au moyen d'un décodeur de sous-mots orienté texte (602),
générer (410) la deuxième séquence (S') de l'au moins un deuxième sous-mot par encodage du texte au moyen d'un encodeur de sous-mots orienté texte (301 ; 603 ; 802), et
en réaction à la détermination (411) du fait que la première séquence (S) et la deuxième séquence (S') diffèrent l'une de l'autre, convertir (412) la première séquence (S) en deuxième séquence (S').

11. Dispositif selon la revendication 10, comprenant en outre une mémoire (903) dans laquelle sont stockées des instructions qui, lorsqu'elles sont exécutées par le ou les processeurs (902), configurent le ou les processeurs (902) de façon à mettre en œuvre l'extraction (101) de la particularité vocale, l'estimation (102) de la première séquence (S), la conversion (103) de la première séquence (S), et la reconnaissance (104) de la partie restante de la parole d'entrée.

12. Dispositif selon la revendication 10 ou 11, dans lequel le ou les processeurs (902) sont conçus en outre pour :
estimer chacun des premiers sous-mots correspondant à l'au moins une partie de la parole d'entrée au moyen d'un encodeur-décodeur de bout en bout (201, 202 ; 601 ; 801) comprenant un ou plusieurs réseaux neuronaux (302) ;
une couche de sortie de l'encodeur-décodeur de bout en bout (201, 202 ; 601 ; 801) comportant des nœuds correspondant à des sous-mots présents dans un dictionnaire de sous-mots,
le dictionnaire de sous-mots enregistrant de préférence des sous-mots en fonction d'une fréquence d'utilisation et séparément des mots.

13. Dispositif selon l'une quelconque des revendications 10 à 12, dans lequel le ou les processeurs (902) sont conçus en outre pour :
déterminer (408) le fait ou non que la formation d'un mot est achevée sous l'effet d'un premier sous-mot dernièrement généré parmi les premiers sous-mots,
en réaction au fait que la formation du mot est achevée, identifier, à partir d'un dictionnaire de sous-mots, un sous-mot correspondant à une combinaison d'au moins un des premiers sous-mots, en tant que ledit au moins un deuxième sous-mot, et
convertir les premiers sous-mots en ledit au moins un deuxième sous-mot identifié.

14. Dispositif selon l'une quelconque des revendications 10 à 13, dans lequel le ou les processeurs (902) sont conçus en outre pour :
estimer (405) une séquence de sous-mots correspondant à au moins une partie de la parole d'entrée à chaque instant d'une pluralité d'instants, ladite estimation (102) de la première séquence (S) étant réalisée à un instant actuel parmi la pluralité d'instants, et
actualiser (413) l'instant actuel en soustrayant de l'instant actuel une valeur obtenue en soustrayant la longueur de la deuxième séquence (S') de la longueur de la première séquence (S).

15. Dispositif selon l'une quelconque des revendications 10 à 14, dans lequel le ou les processeurs (902) sont conçus en outre pour :
générer des premières séquences candidates correspondant à l'au moins une partie de la parole d'entrée,
générer des deuxièmes séquences candidates correspondant aux premières séquences candidates,
générer des résultats de reconnaissance correspondant aux deuxièmes séquences candidates au moyen d'un modèle linguistique, et
déterminer une des deuxièmes séquences candidates comme étant la deuxième séquence (S') compte tenu des résultats de reconnaissance générés.
